# EUROPEAN PATENT APPLICATION

(11) **EP 1 908 949 A1**
(43) Date of publication of application: **09.04.2008**
(21) Application number: 07023336.6
(22) Date of filing: 10.03.2000
(51) Int. Cl.: F02K 1/00, F02K 9/00, F02K 9/44

(54) **Rocket engine**

(30) Priority: 10.03.1999 US 123621 P
(62) Divisional of application: 00946747.3
(71) Applicant: Williams International Co., L.L.C., Walled Lake, Michigan 48390 (US)
(72) Inventor: Stephens, Richard D., Brighton, MI 48114 (US); Thompson, Robert S. Jr., White Lake, MI 48383 (US); Defever, Guido J., Commerce Township, MI 48328 (US); Jones, John F., MI 48072 (US); Musgrave, Dean S., MI 48124 (US); Williams, Gregg G., Bloomfield Hills, MI 48304 (US)
(74) Representative: Smith, Samuel Leonard

(57) **Abstract**

A rocket engine (10) comprises first (76) and second (142) rotary injectors for injecting respective fuel (20) and oxidizer (18) propellant components into a first combustion chamber (34), and the effluent (38) therefrom drives a turbine (40) that rotates the rotary injectors (76, 142). The mixture within the first combustion chamber (34) is preferably fuel-rich so as to reduce the associated combustion temperature, and the fuel-rich effluent mixes in a second combustion chamber (36) with additional oxidizer injected by a third rotary injector (182) so as to generate a high temperature effluent (214) suitable for propulsion. The rotary injectors (76, 142, 182) are adapted with associated rotary pressure traps (86, 146, 174) so as to isolate the low pressure propellant supply (22', 24') from the relatively high pressures in the respective combustion chambers (34, 36). A portion of the fuel-rich effluent from the first combustion chamber (34) is directed through an annular passage (198, 204) surrounding the combustion chambers (34, 36) to provide effusion cooling of a surface (218) of the second combustion chamber (36).

## Description

### TECHNICAL ART

The present invention generally relates to fluid propellant rocket engines and more particularly to fluid propellant rocket engines that integrate as a single unit the turbomachinery for pumping the fluid propellant together with the main combustion chamber of the rocket.

### BACKGROUND OF THE INVENTION

Liquid fuel rocket engines, for example as taught in U.S. Patent Nos. 4,879,874**,** 4,901,525**,** and 5,267,437 generally employ turbomachinery that is distinct from the main rocket nozzle for pressurizing and/or gasifying the liquid propellants prior to injection into the main rocket nozzle. Furthermore, one or more of the propellant components may be adapted to cool the main rocket nozzle through a associated plumbing circuitry. Accordingly, such systems are generally costly and complex, and the added complexity tends to reduce reliability.

U.S. Patents 3,541,793 and 3,577,735 teaches a turborocket engine wherein liquid propellants are pressurized by respective pumps that pressurize a liquid fuel and liquid oxidizer. One of the propellant components discharges first through the walls of the main combustion chamber for cooling purposes, and then into a precombustion chamber. A portion of the other propellant component is discharged in the precombustion chamber, and the remainder is discharged into the main combustion chamber. The effluent from the precombustion chamber drives a turbine that in turn drives the respective pumps. The effluent then discharges into the main combustion chamber. The discharge nozzles are stationary relative to the respective combustion chambers, which can result in temperature variations within the precombustion chamber than can be stressful to the turbine. Further, the use of liquid propellant for cooling the main combustion chamber increases cost, complexity and weight.

U.S. Patents 4,769,996 and 4,870,825 teach rotary liquid fuel injection systems that incorporate rotary pressure traps, however these systems are incorporated into turbine engines that utilize a gaseous oxidizer. Neither of these patents teach a turborocket engine that provides for rotary injection of both fuel and oxidizer component.

U.S. Patent 5,323,602 teaches an effusion cooling system for a gas turbine engine that uses air as the cooling medium. This patent does not teach a turborocket engine, nor does it teach the use of combustion gases from a precombustor for effusion cooling a main combustor.

### SUMMARY OF THE INVENTION

The present invention overcomes the above-noted problems by providing a turborocket engine that integrates the functions usually associated with rocket propulsion main combustion chambers and the turbomachinery usually associated with the turbopumps used by liquid rocket engines into one unit, thereby eliminating most of the plumbing and cooling circuitry normally associated with liquid rocket engines. This results in a much lower cost and lower weight propulsion system than is provided by prior-art liquid rocket engines.

Liquid fuel and liquid oxidizer are provided from pressurized tanks at relatively low pressure to separate sections within a rotor system driven by a relatively low pressure ratio turbine that is powered the combustion effluent generated by a precombustor operated at a relatively rich fuel/oxidizer ratio such that the temperature of the partially combusted effluent can be tolerated by the turbine. The flow rates of liquid fuel and liquid oxidizer are controlled at the relatively low supply pressure with separate throttle control valves, which provides for improved control that is less costly and more reliable. Rotary pressure traps incorporated in the rotor system isolate the relatively low pressure outlets of the respective throttle control valves from the relatively high pressures of the precombustor and main combustor.

The rotor system imparts, by a centrifugal pumping means, rotational kinetic energy and centrifugal force to the liquid fuel and liquid oxidizer. The centrifugal pumping means comprises one or more longitudinal ribs or vanes on the inside surface of the outer wall of a hollow shaft portion with one or more discharge orifices in communication with one or more associated grooves formed between adjacent ribs or vanes. Generally the pressure drop across the discharge orifices is relatively small, and the discharge orifices are not necessarily filled with fluid during normal operation. Moreover, whereas there is generally a one-to-one relationship between grooves and discharge orifices, subject to the constraint of mechanical balance, either more than one discharge orifice, or no discharge orifices, may be in communication with a particular groove. Furthermore, whereas the discharge orifices are generally of uniform size and orientation, subject to the constraint of mechanical balance, different discharge orifices may be sized and oriented differently. The liquid is rotated by the ribs or vanes, and centrifugally accelerated through the discharge orifices, which imparts substantial radial and circumferential velocities to the injected liquids, thereby providing for complete mixing and distribution. The centrifugal pumping means of the present invention does not, however, incorporate a diffuser to convert kinetic energy back to pressure energy, as incorporated in many conventional centrifugal pumps. All of the liquid fuel and some of the liquid oxidizer is injected by rotary injection into the precombustor, and then mixed, vaporized, and partially combusted therein. The temperature of the effluent from the precombustor is controlled by the associated fuel/oxidizer mixture ratio. The rotary injection process provides for a more uniform temperature distribution within the associated toroidal combustion zones within the precombustor, thereby enabling the turbine to operate at a temperature closer to the material-dependent peak operating temperature.

Both the liquid fuel and the liquid oxidizer are centrifugally pumped. Accordingly, the rotor system incorporates concentric hollow sections, wherein the liquid oxidizer is supplied through and pumped from the center of a hollow main shaft, and the liquid fuel is pumped from an annular chamber concentric therewith. The elements of the centrifugal pumps, including the ribs/vanes and discharge orifices, are arranged and sized so as to not disturb the mechanical balance of the rotor system. However, the ribs/vanes and/or the discharge orifices may be non-uniformly spaced in accordance with this constraint.

A portion of the effluent from the precombustor is directed through the precombustor liner, over the outside of the main combustor liner, and into the main combustor through effusion cooling holes so as to cool the main combustor by effusion cooling. A portion of the fuel, either liquid or gaseous, may also be directed over the precombustor liner for cooling the precombustor, and then combined with the effluent stream used to cool the main combustor liner. Furthermore, a portion of the effusion cooling gases may be discharged in the main combustor so as to provide boundary layer cooling of the converging/diverging nozzle.

The relative amount of liquid oxidizer that is delivered to the precombustor and to the main combustor is set by the design of the liquid oxidizer distribution system within the main rotor system. The liquid oxidizer pump discharge is split at the pump exit, feeding the smaller portion of the flow to a rotating injection device which delivers the oxidizer to the precombustor. The rotating injection device also incorporates a rotary pressure trap to isolate the precombustor pressure from the main combustor pressure, thereby preventing the flow of precombustor gas therebetween through the rotary injection device. A portion of the liquid fuel is also fed into a similar rotating injection device proximate to the same axial plane, resulting in mixing and atomizing of the two liquids as they are slung from the shaft system. Combustion of the mixture occurs simultaneously with this mixing and atomization. Additional liquid fuel is injected into the precombustor to assist in mixing and to control the mixture ratio to achieve the proper temperature as the gasses reach the turbine. Accordingly, the fuel/oxidizer mixture ratio may be controlled within specific zones within the precombustor, which provides for improved burn characteristics.

An igniter, such as a high temperature torch, is used to initiate combustion in the precombustor, after which the combustion is continuous and self-sustaining. The heat of combustion in the precombustor vaporizes the injected liquid fuel and liquid oxidizer injected therein, including any liquid fuel used for cooling the precombustor and/or main combustor liners.

The majority of the effluent from the precombustor flows directly into the main combustor after driving the turbine. This effluent and the gases used for cooling the precombustor and/or main combustor are combined and combusted with the remainder of the liquid oxidizer that is fed through the center of the hollow shaft connecting the pump elements to the turbine, and is injected by rotary injection directly into the main combustor as it exists the shaft through a centrifugal pumping device. This high speed rotary injection atomizes the liquid oxidizer which rapidly vaporizes and completes the combustion of the hot fuel rich gasses exiting the turbine directly into the main combustor. The end of the hollow shaft that is exposed to the hot combustion gases of the main combustor may be adapted to provide for the cooling or venting thereof by the discharge of gaseous oxidizer therefrom. The end of the hollow shaft may also or alternatively be polished or coated to provide thermal insulation from the hot combustion gases. The final or overall fuel/oxidizer mixture ratio is adjusted in accordance with a particular objective function, such as maximum thrust subject to constraints on the relative size of the associated propellant tanks.

The present invention can alternately incorporate either a radial pump or an axial pump mounted on the outside of the shaft, prior to the precombustor, for pumping and injecting the liquid fuel into the turborocket engine. Furthermore, the liquid oxidizer pump can be located downstream of where the liquid oxidizer flow is divided between the precombustor and the main combustor.

Accordingly, one object of the present invention is to provide a lower cost turborocket engine.

A further object of the present invention is to provide a turborocket engine with improved reliability.

In accordance with these objectives, one feature of the present invention is that both the fuel and oxidizer are injected as liquids into the respective combustion chambers.

Another feature of the present invention is that both the fuel and oxidizer are injected as cryogenic liquids into the respective combustion chambers.

Yet another feature of the present invention is the incorporation of a precombustor and a main combustor with a turbine disposed therebetween, wherein the turbine drives a pumping means that pumps all of the liquid fuel and a portion of the liquid oxidizer into the precombustor, the fuel/oxidizer mixture ratio controlled such that the precombustor effluent temperature can be tolerated by the turbine, and the remainder of the liquid oxidizer is combined with the effluent from the precombustor/turbine for best overall combustion.

Yet another feature of the present invention is the incorporation of respective vapor core centrifugal pumps for pumping and injecting the liquid fuel and liquid oxidizer.

Yet another feature of the present invention is that the liquid fuel and liquid oxidizer are injected in the respective combustion chambers by rotary injection.

Yet another feature of the present invention is the incorporation of rotary pressure traps that isolate the liquid propellants from the pressure of the combustion chambers.

Yet another feature of the present invention is the control of liquid fuel and liquid oxidizer at the relatively low associated supply pressures, as from associated pressurized tanks.

Yet another feature of the present invention is the effusion cooling of the main combustor with effluent from the precombustor.

The specific features of the present invention provide a number of associated advantages. One advantage of the present invention with respect to the prior art is that a substantial amount of plumbing and machinery associated with conventional liquid propellant rocket engines can be eliminated, thereby reducing cost and improving reliability.

These and other objects, features, and advantages of the instant invention will be more fully understood after reading the following detailed description of the preferred embodiment with reference to the accompanying drawings and viewed in accordance with the appended claims. While this description will illustrate the application of the present invention as a liquid propellant turborocket operating on liquid hydrogen and liquid oxygen, it will be understood by one with ordinary skill in the art that the present invention can also be applied to any liquid bi-propellant system comprising a liquid fuel and a liquid oxidizer.

### BRIEF DESCRIPTION OF THE DRAWINGS

**FIG. 1** illustrates an isometric cross-sectional view of a rocket engine in accordance with the present invention;
**FIG. 2a** illustrates a first cross-sectional view of a rocket engine in accordance with the present invention;
**FIG. 2b** illustrates a second cross-sectional view of a rocket engine in accordance with the present invention;
**FIG. 3** illustrates a first cross-sectional view of a rotor system in accordance with the present invention;
**FIG. 4** illustrates a cross-sectional view of third hollow shaft portion of the present invention;
**FIG. 5** illustrates a cross-sectional view of an annular dam portion of the present invention; and
**FIG. 6** illustrates a second cross-sectional view of a rotor system in accordance with the present invention;

### DETAILED DESCRIPTION OF THE PREFERRED EMBODllVIENT(S)

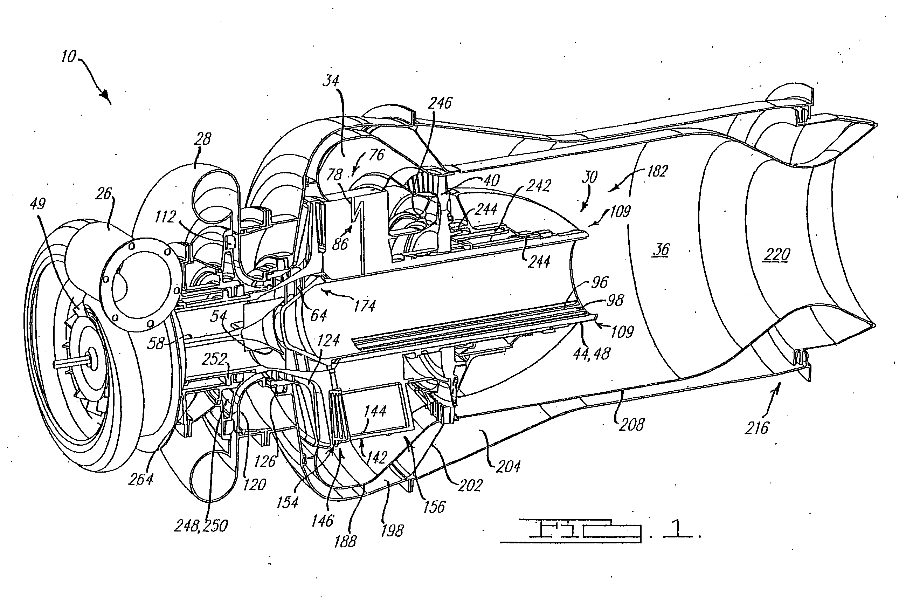

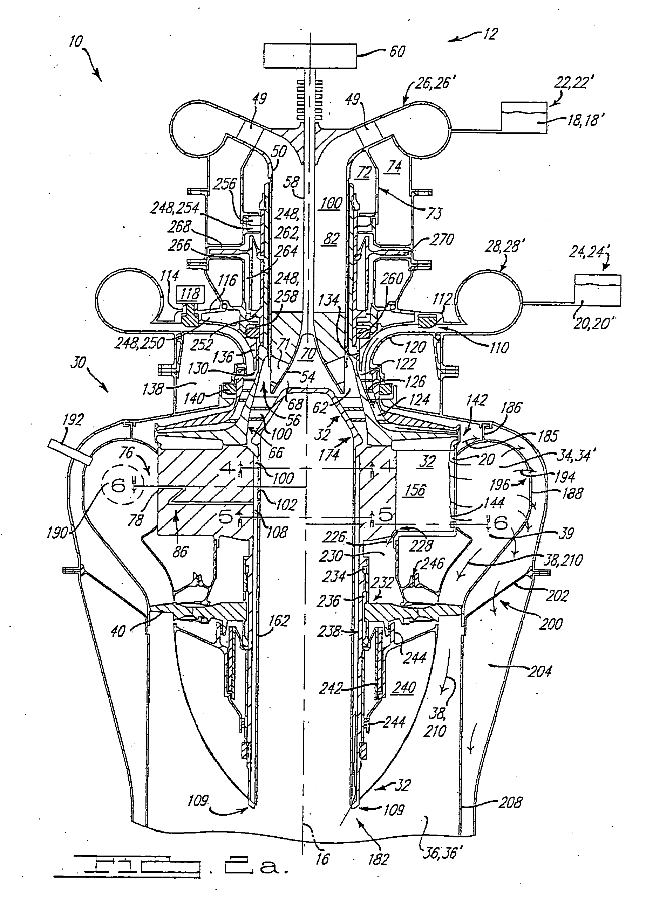

Referring to **Figs. 1, 2a** and **2b**, a **rocket engine 10** with a **first end 12** and a **second end 14** directs thrust from the **second end 14** along an **axis 16. First 18'** and **second 20' propellant components,** for example **liquid oxygen 18** and **liquid hydrogen 20** respectively, are fed from respective **sources 22', 24',** for example respective first and second pressurized **tanks 22, 24,** through respective **first 26'** and **second 28' inlets,** for example respective **scrolls 26, 28,** and into a single **rotor system 30** that contains a **pumping means 32** for pumping the **liquid oxygen 18** and **liquid hydrogen 20** into **first 34'** and **second 36' combustion chambers,** for example a **precombustor 34** and a **main combustor 36** respectively. At least a portion of the **effluent 38** from the **outlet 39** of the **precombustor 34** drives a **turbine 40** that rotates the **rotor system 30.** All, or most, of the hydrogen is fed to the **precombustor 34** but the **precombustor 34** receives only sufficient oxygen to raise its efflux temperature to a level that can be easily tolerated by the **turbine 40.** The hydrogen rich **effluent 38** discharged by of the **turbine 40,** along with any hydrogen that bypasses the **turbine 40,** is fed to the **main combustor 36** where the remainder of the oxygen is introduced so as to provide an overall fuel/oxidizer mixture ratio within the **main combustor 36** appropriate for the particular fuel/oxidizer system, whereby the combustion within the **main combustor 36** provides the very high temperatures normally associated with rocket engines. For example, in a liquid hydrogen (LH₂)/liquid oxygen (LO₂) system, the oxidizer/fuel mass ratio is preferably about 5.5:1, but could be any known mixture ratio or range of mixture ratios capable of supporting combustion. For example, a mixture ratio of 2.8:1 LH₂:LO₂ provides for the highest impulse, albeit with the associated disadvantage of requiring undesirably large liquid hydrogen storage tanks.

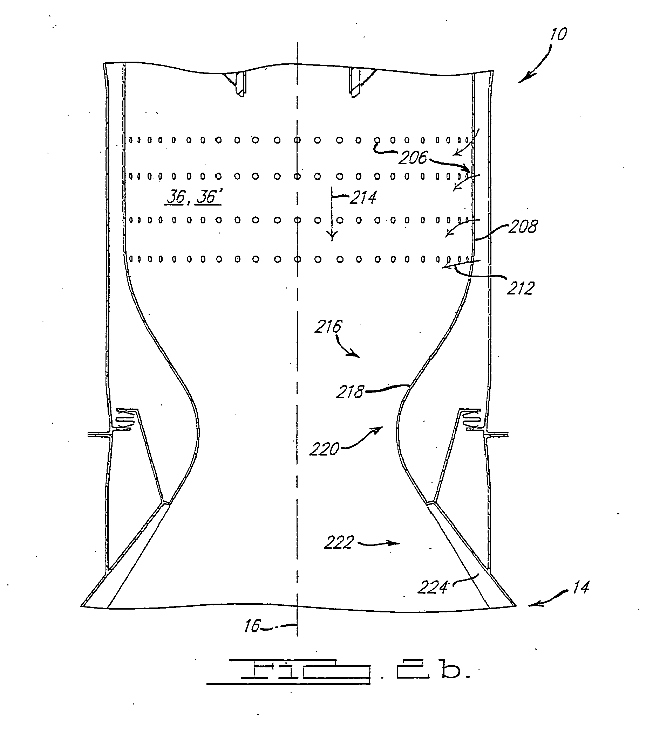

Referring to **Fig. 3,** the **rotor system 30** comprises a **shaft 44** having **first 46** and **second 48 hollow shaft portions** adjacent and coupled and open to one another. The inside diameter of at least a portion of the **second hollow shaft portion 48** is greater than that of the **first hollow shaft portion 46. Liquid oxygen 18** is fed from the **oxygen tank 22** into the **oxygen scroll 26** at the **first end 12** of the **rocket engine 10** at a pressure of about 30 psig, through a plurality of **flow directing vanes 49,** and into a **stationary tube 50** that extends through and inside a **first end 52** of the **first hollow shaft portion 46**. The total quantity of oxygen supplied to the **rocket engine 10** is regulated by a moveable **conical throttle element 54** forming a controlled **first throttling restriction 56** that restricts the flow of oxygen from of the **stationary tube 50**. The **conical throttle element 54** is positioned by a **rod 58** actuated by a **first controller 60** from the **first end 12** of the **rocket engine 10**.

**Liquid oxygen 18** passing through the **first throttling restriction 56** is directed into an **interior 62** of the **second hollow shaft portion 48** of the rotating **shaft 44**, which contains a **first inducer 64** comprising at least one screw-like vane that provides combined axial and rotational acceleration of the **liquid oxygen 18** so as to induce the **liquid oxygen 18** to rotate with the **shaft 44,** while minimizing the joule heating and resulting vaporization as a result of mechanical agitation by the inducing process. The rotation of the **shaft 44** generates centrifugal forces that cause the **liquid oxygen 18** to gravitate towards the **inside surface 66** of the shaft 44 thereby driving any **oxygen vapor 68** towards the **center 70** of the **shaft 44**, which is vented by at least one **vent duct 71** towards the outside of the **stationary tube 50**. Because the **first hollow shaft portion 46** is smaller in inside diameter than the **second hollow shaft portion 48**, the centrifugal separation of **liquid oxygen 18** and **oxygen vapor 68** causes the rotating **first hollow shaft portion 46** to fill with **oxygen vapor 68**, which discharges into a fixed first annular vent **chamber 72**, through a **vent port 73**, and into a fixed **second annular vent chamber 74**, from where the **oxygen vapor 68** is vented from the **rocket engine 10**.

A **first rotary injector 76** coupled to the **shaft 44**, particularly to the **second hollow shaft portion 48**, within the **precombustor 34** comprises at least one **first rotary orifice 78** in fluid communication with an **inlet 80** and with the **precombustor 34**. The **inlet 80** of the **first rotary injector 76** is in fluid communication with the **oxygen scroll 26** that supplies **liquid oxygen 18** through an associated fluid path in the respective **interiors 82**, **62** of the **first 46 and second 48 hollow shaft portions**. The **first rotary orifice 78** rotates with the **shaft 44** about the **axis 16** thereof. The **first rotary injector 76** further comprises at least one **first rotary pressure trap 86** comprising a **first fluid passage 88** having an **inlet 90** and an **outlet 92** in fluid communication there through along a length thereof. The **first fluid passage 88** is adapted so that when rotated about the **axis of rotation 16**, a centrifugal acceleration at any point within the **first fluid passage 88** is greater than a centrifugal acceleration at either the **inlet 90** or the **outlet 92** thereof.

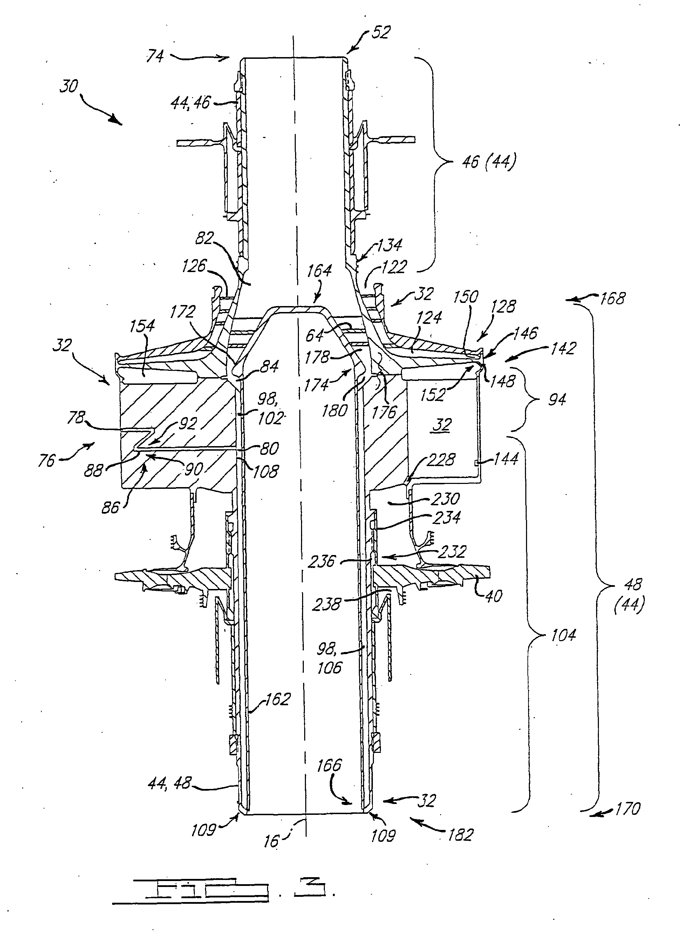

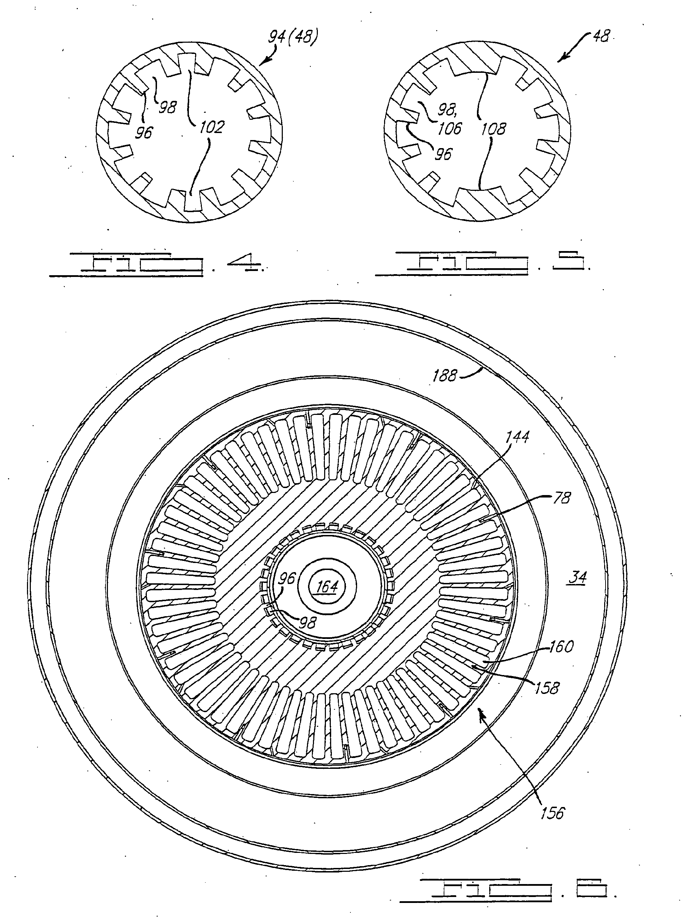

Referring to **Figs. 1** and **4,** the **second hollow shaft portion 48** further comprises a **third hollow shaft portion 94** comprising a plurality of **longitudinal ribs 96** and **grooves 98** on the inside thereof. The **longitudinal grooves 98** constitute a portion of a **fluid passage 100** between the **oxygen scroll 26** and the **first rotary injector 76.** For uniformly sized **longitudinal grooves 98,** each **longitudinal groove 98** receives an equal flow of **liquid oxygen 18** from the **first inducer 64.** However, the **longitudinal grooves 98** may be non-uniformly sized - within the constraint of rotational balance, -- resulting in corresponding nonuniform liquid oxygen flow rates within the respective **longitudinal grooves 98.** At least one **first groove 102** is in fluid communication with the **inlet 80** of the **first rotary injector 76.** The **second hollow shaft portion 48** further comprises a **fourth hollow shaft portion 104** into which at least one **second groove 106** extends from the **third hollow shaft portion 94** to **fourth hollow shaft portion 104** along the inside thereof. Referring to **Fig. 5,** those **first grooves 102** that do not extend into the **fourth hollow shaft portion 104** are blocked at by associated **annular dam segments 108** between the **third 94** and **fourth 104 hollow shaft portions.**

**Liquid oxygen 18** flowing along the **first grooves 102** discharges through the respective **first rotary orifices 78** into the **precombustor 34.** The remaining **liquid oxygen 18** flowing along the **longitudinal grooves 98,** particularly the **second grooves 106,** discharges through respective **third rotary orifices 109** into the **main combustor 36,** wherein the relative flows of **liquid oxygen 18** into the **precombustor 34** and the **main combustor 36** are adapted to control the mixture ratios in the respective combustion chambers, particularly so that the mixture in the **precombustor 34** is substantially richer, and burns at a substantially lower temperature, than the mixture in the **main combustor 36.** This arrangement precludes the need for separate servo-control of liquid oxygen flow into the **precombustor 34.** Preferably, for each **longitudinal groove 98** that is discharged through a **first rotary orifice 78** into the **precombustor 34,** approximately five (5) **longitudinal groove 98** discharge through the **third rotary orifices 109** into the **main combustor 36.** The radial injection of **liquid oxygen 18** from the rotating **shaft 44** into both the **precombustor 34** and the **main combustor 36** provides for even circumferential distribution and atomization thereof therein.

Referring to **Figs. 1, 2a** and **2b, liquid hydrogen 20** is delivered from the associated pressurized **hydrogen tank 24** into the **hydrogen scroll 28** at a pressure of approximately 15 psig. The **liquid hydrogen 20** flows radially inward from the **hydrogen scroll 28** through a **second throttling restriction 110** controlled by **throttle ring 112** that is positioned by at least one **control rod 114** through the **case 116** and connected to a **second controller 118**.

Downstream of the **second throttling restriction 110,** the **liquid hydrogen 20** flows through a curved **annular flow diverter 120** that redirects the flow from radially inward to axial. The curved **annular flow diverter 120** may incorporate vanes to impart pre-swirl to the flow. The **liquid hydrogen 20** discharges from the curved **annular flow diverter 120** into the **interior 122** of an **annular duct 124** in the **rotor system 30** and into a **second inducer 126** contained therein and rotating therewith. The **second inducer 126** comprises at least one screw-like vane that provides combined axial and rotational acceleration of the **liquid hydrogen 20** so as to induce the **liquid hydrogen 20** to rotate with the **shaft 44,** while minimizing the joule heating and resulting vaporization as a result of mechanical agitation by the inducing process. Downstream of the **second inducer 126,** the **annular duct 124** expands in diameter, wherein centrifugal forces cause **liquid hydrogen 20** within the **annular duct 124** to gravitate towards the **outermost region 128** thereof, thereby displacing **hydrogen vapor 130** therein towards the **interior 122** thereof.

A **first labyrinth seal 134** disposed between the outside of the **second hollow shaft portion 48** and the structure of the curved **annular flow diverter 120** meters the leakage of **hydrogen vapor 130** from the **annular duct 124** through a **first vent duct 136** into an **third annular vent chamber 138** from where the **hydrogen vapor 130** is vented from the **rocket engine 10.** A **first seal 140,** for example a carbon seal, operative between the outside of the rotating **annular duct 124** and the fixed **third annular vent chamber 138,** seals against the leakage of hydrogen from the fixed **annular flow diverter 120,** around the rotating **annular duct 124** and into the fixed **third annular vent chamber 138.**

The main liquid hydrogen flow is delivered outwardly from the rotating **annular duct 124** into a **second rotary injector 142** coupled to the **shaft 44,** particularly to the **second hollow shaft portion 48,** within the **precombustor 34.** The **second rotary injector 142** comprises at least one **second rotary orifice 144** in fluid communication with the **annular duct 124** and with the **precombustor 34.** The **second rotary orifice 144** rotates with the **shaft 44** about the **axis 16** thereof. The **second rotary injector 142** further comprises at least one **second rotary pressure trap 146** comprising a **second fluid passage 148** having an **inlet 150** and an **outlet 152** in fluid communication there through along a length thereof. The **second fluid passage 148** is adapted so that when rotated about the **axis of rotation 16,** a centrifugal acceleration at any point within the **second fluid passage 148** is greater than a centrifugal acceleration at either the **inlet 150** or the **outlet 152.** Referring to **Figs. 2a, 3** and **6,** each **outlet 152** of each **second rotary pressure trap 146** is in fluid communication with an **annular manifold 154,** which is in fluid communication with an **annular chamber 156** partitioned by a plurality of **radial vanes 158** into a plurality of **radial chambers 160,** at least some of which discharge into respective **second rotary orifices 144.**

In operation, the **radial vanes 158** cause **liquid hydrogen 20** within the **annular chamber 156** to rotate therewith, and the resulting centrifugal force produces a large pressure gradient in the rotating **liquid hydrogen 20** and a high discharge pressure at the **second rotary orifices 144.** The **second rotary orifices 144** are preferably disposed at various axial locations so as to provide for improved mixing and combustion within the **precombustor 34.** Furthermore, a portion or all of the **second rotary orifices 144** may be angulated relative to a radial direction. The locations, orientations, and sizes of the associated **second rotary orifices 144** are adapted so that the **rotor system 30** is mechanically balanced.

At normal flow rates, **liquid hydrogen 20** does not completely fill either the **annular duct 124** or the **annular chamber 156,** which collectively act as a vapor core pump. The **second fluid passage 148** of the **second rotary pressure trap 146** remains loaded with **liquid hydrogen 20** so as to prevent backflow of high pressure vapor from the region downstream of the **second rotary pressure trap 146.**

The **second hollow shaft portion 48** further comprises a **shaft liner 162** having a **closed end 164** and a **second end 166,** each respectively proximate to a **first end 168** and a **second end 170** of the **second hollow shaft portion 48,** wherein the **closed end 164** of the **shaft liner 162** is shaped so as to form a **boundary 172** of a **third rotary pressure trap 174.** The **third rotary pressure trap 174** comprises a **third fluid passage 176** having an **inlet 178** and an **outlet 180** in fluid communication there through along a length thereof. The **third fluid passage 176** is adapted by the **boundary 172** so that when rotated about the **axis of rotation 16** a centrifugal acceleration at any point within the **third fluid passage 176** is greater than a centrifugal acceleration at either the **inlet 178** or the **outlet 180.**

A **third rotary injector 182,** located within the **main combustor 36** comprises at least one **third rotary orifice 109** at the **second end 170** of the **second hollow shaft portion 48** in fluid communication with at least one **second groove 106** and with the **main combustor 36,** wherein the at least one **second groove 106** is in fluid communication with the **outlet 180** of the **third rotary pressure trap 174** in the fluid path from the **oxygen scroll 26** that supplies **liquid oxygen 18** to the **third rotary orifice 109.** The **third rotary orifice 109** is coupled to the **shaft 44,** particularly to the **fourth hollow shaft portion 104,** and rotates with the **shaft 44** about the **axis 16** thereof.

In operation, **liquid oxygen 18** from the pressurized **oxygen tank 22** through the interior of the **stationary tube 50** inside the **first hollow shaft portion 46** discharges outwardly from the **first throttling restriction 56** into the **second hollow shaft portion 48** and is rotationally accelerated by the **first inducer 64** causing the **liquid oxygen 18** to rotate with the **shaft 44.** Resulting centrifugal forces pressurize the **liquid oxygen 18** in proportion to the square of the radius from the **center 70** of the **shaft 44,** causing the **liquid oxygen 18** to flow along the inside surface of the **second hollow shaft portion 48. Liquid oxygen 18** fills the **third fluid passage 176** of the **third rotary pressure trap 174,** and with a sufficient shaft speed, the **third fluid passage 176** remains sufficiently full **of liquid oxygen 18** to isolate high pressures of the **main combustor 36** downstream of the **third rotary pressure trap 174** from the relatively low pressure of the liquid **oxygen 18** upstream of the **third rotary pressure trap 174.**

In accordance with the teachings of U.S. Patent No. 4,870,825**,** -- incorporated herein by reference, -- a rotary pressure trap comprises a fluid passage with an inlet and an outlet, wherein the fluid passage adapted so the when the rotary pressure trap is rotated, a centrifugal acceleration at any point within the fluid passage is greater than a centrifugal acceleration at any point on either the inlet or the outlet. Accordingly, when the fluid passage is filled with a relatively high density medium, such as a liquid, the radial levels of the inlet and outlet will be equal when there is no pressure differential therebetween, and will be otherwise unequal by an amount dependent upon the magnitude of the pressure differential and the speed of rotation. Accordingly, for a relatively low pressure liquid supply to an inlet of a rotary pressure trap feeding a relatively high pressure region at the outlet, the rotary pressure trap can prevent vapor from backflowing therethrough.

Accordingly, the **first rotary pressure trap 86** isolates the **liquid oxygen 18** at the **inlet 80** of the **first rotary injector 76** at the pressure of the **main combustor 36** from the relatively higher pressure gases in the **precombustor 34.** Similarly, the **second rotary pressure trap 146** isolates the **liquid hydrogen 20** in the **annular duct 124** at the supply pressure from the relatively higher pressure gases in the **precombustor 34.** Moreover, the **third rotary pressure trap 174** isolates the **liquid oxygen 18** from the **first throttling restriction 56** at the supply pressure from the relatively higher pressure gases in the **precombustor 34.**

Preferably, the **second rotary orifices 144** discharge entirely within the **precombustor 34.** However, some of the **second rotary orifices 144** may be adapted so as to discharge a **bypass flow 185** of **liquid hydrogen 20** through a **first port 186** leading over the outside the **precombustor liner 188** for purposes of cooling both the **precombustor 34** and the **main combustor 36.** Up to 50% of the hydrogen flow may be directed outside the **precombustor liner 188** and the remainder is discharged into the **precombustor 34** proximate to the **first rotary orifices 78** from which **liquid oxygen 18** is discharged. The **rotor system 30** rotating at a high angular speed imparts a substantial tangential velocity to the **liquid hydrogen 20** and **liquid oxygen 18** discharging therefrom, resulting in a well-mixed hydrogen/oxygen mixture within **toroidal zones 190** within the **precombustor 34,** which maintains combustion once ignited by an **igniter 192,** such as a chemical torch or an electrical spark or plasma device.

A **first portion 194** of the **effluent 38** from the **precombustor 34** flows through at least one **first orifice 196** in the **precombustor liner 188,** into a **first annular passage 198** at least partially surrounding the **precombustor liner 188,** through a **second port 200** in the **combustor liner support structure 202,** into a **second annular passage 204,** through a plurality of **effusion cooling holes 206** in the **main combustor liner 208.**

The **effluent 38** from the **precombustor 34** is a very rich (i.e., excess hydrogen) mixture at a moderate temperature -- for example 1,200° F. A **second portion 210** of the **effluent 38** is directed through a lightly loaded single stage axial **turbine 40** which develops substantially only sufficient power to drive the **pumping means 32** inherent in the hydrogen and oxygen flow paths, wherein the **pumping means 32** comprises the various inducers and the ribbed and vaned sections of the **rotor system 30** that impart kinetic energy to the **liquid oxygen 18** and the **liquid hydrogen 20.**

The pressure drop through the **turbine 40** is sufficient to cause the **first portion 194** of the **effluent 38** from the relatively higher pressure **precombustor 34** to flow into the relatively lower pressure **main combustor 36.** The **bypass flow 185** of **liquid hydrogen 20** directed outside the **precombustor liner 188** absorbs sufficient heat to cause that **liquid hydrogen 20** to vaporize from the heat of the **precombustor liner 188** and from the **first portion 194** of the **effluent 38** flowing into the **precombustor liner 188.**

The relatively rich **second portion 210** of **effluent 38** discharged from the **turbine 40** into the **main combustor 36** mixes with the relatively rich **effusion cooling gases 212** from the **effusion cooling holes 206,** and with the **liquid oxygen 18** that is rotationally discharged from the at least one **third rotary orifice 109** so as to produce a high temperature **effluent 214** necessary to achieve good propulsion efficiency. This high temperature **effluent 214** is expanded through a **converging/diverging** nozzle **216** in a conventional fashion. The **surface 218** of the **converging/diverging nozzle 216** as far down as the **nozzle throat 220** is cooled by the **effusion cooling gases 212** flowing along the **main combustor liner 208.** The **diverging portion 222** of the **converging/diverging nozzle 216** is preferably lined with replaceable **ablative material 224.**

A small portion of the cold **hydrogen vapor 226** from the **annular chamber 156** flows through at least one **second orifice 228** into a **second annular chamber 230,** then through at least one **third orifice 232** in a splined **bushing 234** supporting the **turbine 40,** through a **third annular chamber 236** within the **bushing 234,** through at least one **fourth orifice 238** in the **bushing 234,** into the **turbine end bearing enclosure 240** to cool the foil **first axial bearing 242,** through a plurality of **second labyrinth seals 244,** and into the **main combustor 36.** The **turbine end bearing enclosure 240** is also sealed from the **precombustor 34** with a **third labyrinth seal 246.**

At least one annular buffer chamber filled with a **pressurized inert gas 248,** for example helium, is provided for isolating the **first 18'** and **second 20' propellant components** so as to prevent the formation of a flammable mixture therebetween at a location other than within the **first 34'** or **second 36' combustion chambers.** The pressure of the **pressurized inert gas 248** in the at least one annular buffer chamber is higher than the pressure of either propellant component in a chamber adjacent thereto. Referring to **Fig. 2a,** a **first annular buffer chamber 250** is adapted to receive a stream of **pressurized inert gas 248,** which is directed at a small **impulse turbine 252** for starting the **rocket engine 10. Pressurized inert gas 248** in a **second annular buffer chamber 254** is sealed from the oxygen supply by a **second seal 256,** for example a carbon seal, between the **first annular vent chamber 72** and the second **annular buffer chamber 254. Pressurized inert gas 248** in a **third annular buffer chamber 258** is sealed from the hydrogen supply by a **third seal 260,** for example a carbon seal, between the **third annular vent chamber 138** and the **third annular buffer chamber 258. Pressurized inert gas 248** in at least one **fourth annular buffer chamber 262** cools a foil **second axial bearing 264** and foil **first 266** and **second 268 thrust bearings** that bear against a **thrust reaction rotor 270.**

In an exemplary system, liquid hydrogen at approximately 40 psig. flowing from a pressurized tank at a flow rate of approximately 9.3 pounds per second to the precombustor reacts with liquid oxygen fed from a pressurized tank at approximately 40 psig at a flow rate of approximately 9.3 pounds per second to the precombustor to generate an effluent with a temperature of approximately 1300° F at a pressure of approximately 220 psig. This effluent from the precombustor drives the turbine that imparts rotational kinetic energy to the liquid propellant components. The effluent from the precombustor then further reacts in the main combustor with an additional 41.8 pounds per second of oxygen to produce an effluent with a temperature of approximately 5400° F at a pressure of approximately 200 psig., which provides approximately 25,000 pounds of thrust in a vacuum.

One of ordinary skill in the art will appreciate that the present invention can be readily adapted for liquid fuels other than liquid hydrogen, and liquid oxidizers other than liquid oxygen. Accordingly, if operated with liquid fuels that are relatively denser from the associated liquid oxidizer than liquid hydrogen is relative to liquid oxygen, the diameter of the annular chambers associated with the liquid fuel pumping and delivery system would be relatively smaller with respect to the diameter of the chamber/shaft carrying the liquid oxidizer. Moreover, the preferred geometry will depend upon the speed of operation and the associated properties of the propellant components at the operating pressures and temperatures.

While specific embodiments have been described in detail in the foregoing detailed description and illustrated in the accompanying drawings, those with ordinary skill in the art will appreciate that various modifications and alternatives to those details could be developed in light of the overall teachings of the disclosure. Accordingly, the particular arrangements disclosed are meant to be illustrative only and not limiting as to the scope of the invention, which is to be given the full breadth of the appended claims and any and all equivalents thereof.

Included below as part of the description are the claims of the parent application as filed.
1. A rocket engine, comprising:
   a. a first inlet adapted to receive a first propellant component from a source of said first propellant component;
   b. a second inlet adapted to receive a second propellant component from a source of said second propellant component;
   c. a first combustion chamber comprising an outlet;
   d. a first rotary injector within said first combustion chamber comprising at least one first rotary orifice having a first axis of rotation, wherein said at least one first rotary orifice is in fluid communication with at least one inlet of said first rotary injector and with said first combustion chamber, and said at least one inlet of said first rotary injector is in fluid communication with said first inlet of said rocket engine; and
   e. a second rotary injector within said first combustion chamber comprising at least one second rotary orifice having a second axis of rotation, wherein said at least one second rotary orifice in fluid communication with at least one inlet of said second rotary injector and with said first combustion chamber, and said at least one inlet of said second rotary injector is in fluid communication with said second inlet of said rocket engine.
2. A rocket engine as recited in claim **1**, wherein said source of first propellant component comprises a first pressurized tank and said source of second propellant component comprises a second pressurized tank.
3. A rocket engine as recited in claim **1**, wherein said first propellant component comprises a fuel and said second propellant component comprises an oxidizer.
4. A rocket engine as recited in claim **1**, wherein said first and second propellant components are each liquid.
5. A rocket engine as recited in claim **4**, wherein said first and second propellant components are each cryogenic liquids.
6. A rocket engine as recited in claim **1**, wherein said first and second propellant components are isolated from one another at at least one location by at least one chamber containing an inert gas.
7. A rocket engine as recited in claim **6**, wherein a pressure of said inert gas is greater than the greatest pressure of a pressure selected from the group consisting of a pressure of said first propellant component and a pressure of said second propellant component so as to prevent a propellant component selected from the group consisting of said first propellant component and said second propellant component from flowing into said at least one chamber.
8. A rocket engine as recited in claim **1**, wherein said first rotary injector is adapted to isolate a pressure of said first combustion chamber from a pressure at said at least one inlet of said first rotary injector.
9. A rocket engine as recited in claim **1**, wherein said second rotary injector is adapted to isolate a pressure of said first combustion chamber from a pressure at said at least one inlet of said second rotary injector.
10. A rocket engine as recited in claim **8**, wherein said second rotary injector is adapted to isolate a pressure of said first combustion chamber from a pressure at said at least one inlet of said second rotary injector.
11. A rocket engine as recited in claim **1**, wherein said second axis of rotation is coincident with said first axis of rotation.
12. A rocket engine as recited in claim **1**, wherein said at least one inlet of said first rotary injector is in fluid communication with said first inlet of said rocket engine through a first fluid passage, said at least one inlet of said second rotary injector is in fluid communication with said second inlet of said rocket engine through a second fluid passage, and said first and second fluid passages are concentric with one another.
13. A rocket engine as recited in claim **12**, wherein said second axis of rotation is coincident with said first axis of rotation, and said first and second fluid passages are concentric with said first and second axes of rotation.
14. A rocket engine as recited in claim **13**, further comprising a first inducer within said first fluid passage, wherein said first inducer rotates about said first axis of rotation.
15. A rocket engine as recited in claim **14**, further comprising a second inducer within said second fluid passage, wherein said second inducer rotates about said second axis of rotation.
16. A rocket engine as recited in claim **1**, further comprising a first throttling restriction, wherein said first throttling restriction has an inlet and an outlet, said inlet of said first throttling restriction is in fluid communication with said first inlet of said rocket engine, and said outlet of said first throttling restriction is in fluid communication with said inlet of said first rotary injector.
17. A rocket engine as recited in claim **16**, further comprising a first controller for controlling said first throttling restriction.
18. A rocket engine as recited in claim **16**, further comprising a second throttling restriction, wherein said second throttling restriction has an inlet and an outlet, said inlet of said second throttling restriction is in fluid communication with said second inlet of said rocket engine, and said outlet of said second throttling restriction is in fluid communication with said inlet of said second rotary injector.
19. A rocket engine as recited in claim **18**, further comprising a first controller for controlling said first throttling restriction and a second controller for controlling said second throttling restriction.
20. A rocket engine as recited in claim **1**, further comprising an igniter operatively connected to said first combustion chamber.
21. A rocket engine as recited in claim **1**, further comprising a turbine, wherein said turbine has an inlet and an outlet, said inlet is in fluid communication with said outlet of said first combustion chamber, and said turbine is operatively connected to said first and second rotary injectors, whereby when said rocket engine is operated, said first and second propellant components are combusted within said first combustion chamber so as to generate an effluent and said turbine is driven by at least a portion of said effluent from said first combustion chamber.
22. A rocket engine as recited in claim **14**, further comprising a turbine, wherein said turbine has an inlet and an outlet, said inlet is in fluid communication with said outlet of said first combustion chamber, and said turbine is operatively connected to said first and second rotary injectors, said turbine is operatively coupled to said first inducer, whereby when said rocket engine is operated, said first and second propellant components are combusted within said first combustion chamber so as to generate an effluent and said turbine is driven by at least a portion of said effluent from said first combustion chamber.
23. A rocket engine as recited in claim **15**, further comprising a turbine, wherein said turbine has an inlet and an outlet, said inlet is in fluid communication with said outlet of said first combustion chamber, and said turbine is operatively connected to said first and second rotary injectors, said turbine is operatively coupled to said first and second inducers, whereby when said rocket engine is operated, said first and second propellant components are combusted within said first combustion chamber so as to generate an effluent and said turbine is driven by at least a portion of said effluent from said first combustion chamber.
24. A rocket engine as recited in claim **21**, wherein said first and second propellant components are partially combusted within said first combustion chamber so as to reduce a temperature of said effluent to a level that can be tolerated by said turbine.
25. A rocket engine as recited in claim **24**, wherein said first combustion chamber operates with a substantially fuel rich fuel/oxidizer mixture ratio compared to a stoichiometric ratio.
26. A rocket engine as recited in claim **21**, further comprising:
   a. a second combustion chamber in fluid communication with said outlet of said turbine; and
   b. a third rotary injector within said second combustion chamber comprising at least one third rotary orifice having a third axis of rotation, wherein said at least one third rotary orifice is in fluid communication with at least one inlet of said third rotary injector and with said second combustion chamber, and said at least one inlet of said third rotary injector is in fluid communication with said second inlet of said rocket engine through said second fluid passage, whereby when operating said second combustion chamber combusts a mixture comprising said effluent and said second propellant component so as to generate a second effluent.
27. A rocket engine as recited in claim **26**, wherein said third axis of rotation is coincident with said first axis of rotation.
28. A rocket engine as recited in claim **26**, wherein said second rotary injector injects a first portion of said second propellant component into said first combustion chamber, and said third rotary injector injects the remaining portion of said second propellant component into said second combustion chamber.
29. A rocket engine as recited in claim **1**, further comprising at least one shaft portion supported by at least one bearing, wherein said at least one shaft portion has an axis of rotation, said at least one shaft portion is operatively connected to said first and second rotary injectors, said at least one shaft portion comprises a hollow shaft portion, and said first fluid passage comprises said hollow shaft portion.
30. A rocket engine as recited in claim **29**, wherein said at least one shaft portion comprises at least one annular chamber and said second fluid passage comprises said at least one annular chamber.
31. A rocket engine as recited in claim **15**, further comprising at least one shaft portion operatively connected to said first and second inducers, wherein said at least one shaft portion has an axis of rotation, said at least one shaft portion is operatively connected to said first and second rotary injectors, said at least one shaft portion comprises a hollow shaft portion, and said second fluid passage comprises said hollow shaft portion.
32. A rocket engine as recited in claim **29**, wherein said at least one bearing is cooled by a vapor of one of said firstand second propellant components.
33. A rocket engine as recited in claim **29**, further comprising a first throttling restriction, wherein said first throttling restriction has an inlet and an outlet, said inlet of said first throttling restriction is in fluid communication with said first inlet of said rocket engine, said outlet of said first throttling restriction is in fluid communication with said inlet of said first rotary injector, and said second throttling restriction is located within said hollow shaft portion.
34. A rocket engine as recited in claim **33**, wherein a location of said first throttling restriction within said hollow shaft portion is proximate to said inlet of said first rotary injector.
35. A rocket engine as recited in claim **30**, further comprising a second throttling restriction, wherein said second throttling restriction has an inlet and an outlet, said inlet of said second throttling restriction is in fluid communication with said second inlet of said rocket engine, said outlet of said second throttling restriction is in fluid communication with said inlet of said second rotary injector, and said first throttling restriction operatively coupled to said at least one annular chamber.
36. A rocket engine as recited in claim **35**, wherein said second throttling restriction is operatively coupled to said at least one annular chamber at a location that is proximate to said inlet of said second rotary injector.
37. A rocket engine as recited in claim **27**, further comprising at least one shaft portion supported by at least one bearing, wherein said at least one shaft portion has an axis of rotation, said at least one shaft portion is operatively connected to said first and second rotary injectors, said at least one shaft portion comprises a hollow shaft portion, said second fluid passage comprises said hollow shaft portion, said at least one shaft portion extends through said first combustion chamber and into said second combustion chamber, and said at least one shaft portion is operatively connected to said turbine and to said at least one third rotary injector, whereby said turbine rotates said rotor shaft responsive to said at least a portion of said effluent from said first combustion chamber discharging through said turbine.
38. A rocket engine as recited in claim **26**, further comprising a converging/diverging nozzle having an inlet and an outlet, wherein said inlet of said converging/diverging nozzle is in fluid communication with said outlet of said second combustion chamber.
39. A rocket engine as recited in claim **38**, wherein a diverging portion of said converging/diverging nozzle comprises an ablative lining.
40. A rocket engine as recited in claim **29**, further comprising an electrical machine selected from the group consisting of an electric starter, an electric generator, and an electric alternator, wherein said electric machine is operatively connected to said at least one shaft portion.
41. A rocket engine as recited in claim **29**, further comprising a turbine operatively coupled to a source of pressurized inert gas, wherein said turbine is operatively connected to said at least one shaft portion, whereby, when operative, a stream of inert gas from said source of pressurized inert gas engages said turbine so as to rotate said at least one shaft portion for starting the rocket engine.
42. A method of operating a rocket engine, comprising:
   a. supplying first and second propellant components to said rocket engine;
   b. injecting at least a portion of said first propellant component into a first combustion chamber through at least one first rotary orifice within said first combustion chamber;
   c. injecting at least a portion of said second propellant component into said first combustion chamber through at least one second rotary orifice within said first combustion chamber;
   d. at least partially combusting said first and second propellant components in said first combustion chamber so as to generate an effluent; and
   e. discharging said effluent from said first combustion chamber.
43. The method of operating a rocket engine as recited in claim **42**, wherein the operation of supplying first and second propellant components is through concentric passages.
44. The method of operating a rocket engine as recited in claim **42**, further comprising the operation of throttling at least one of said first and second propellant components with at least one throttling restriction.
45. The method of operating a rocket engine as recited in claim **44**, further comprising locating said at least one throttling restriction at at least one location selected from the group consisting of within an interior region of a hollow rotating shaft and within an annular passage, wherein said at least one location is in fluid communication with at least one of said first and second rotary orifices.
46. The method of operating a rocket engine as recited in claim **45**, further comprising locating said at least one throttling restriction proximate to at least one of said first and second rotary orifices.
47. The method of operating a rocket engine as recited in claim **43**, wherein an interior region within at least one said concentric passage comprises a vapor phase of said at least one of said first and second propellant components.
48. The method of operating a rocket engine as recited in claim **43**, further comprising inducing at least one of said first and second propellant components to rotate with at least one of said first and second rotary injectors, wherein the operation of inducing is with at least one inducer located inside at least one said concentric passage.
49. The method of operating a rocket engine as recited in claim **42**, further comprising isolating a pressure of said first propellant component from a pressure of said first combustion chamber.
50. The method of operating a rocket engine as recited in claim **42**, further comprising isolating a pressure of said at least a portion of said second propellant component from a pressure of said first combustion chamber.
51. The method of operating a rocket engine as recited in claim **42**, wherein said first propellant component comprises a liquid fuel and said second propellant component is a liquid oxidizer.
52. The method of operating a rocket engine as recited in claim **51**, wherein a ratio of injected liquid fuel to injected liquid oxidizer is fuel rich in said first combustion chamber.
53. The method of operating a rocket engine as recited in claim **42**, further comprising partially combusting said first and second propellant components in said first combustion chamber.
54. The method of operating a rocket engine as recited in claim **42**, further comprising discharging at least a portion of said effluent from said first combustion chamber into a second combustion chamber.
55. The method of operating a rocket engine as recited in claim **42**, further comprising discharging at least a portion of said effluent from said first combustion chamber through a turbine.
56. The method of operating a rocket engine as recited in claim **55**, further comprising rotating said at least one first rotary orifice and said at least one second rotary orifice with said turbine.
57. The method of operating a rocket engine as recited in claim **54**, further comprising injecting a remaining portion of said second propellant component into said second combustion chamber through at least one third rotary orifice within said second combustion chamber.
58. The method of operating a rocket engine as recited in claim **54**, further comprising modifying at least one characteristic of said at least a portion of said effluent from said first combustion chamber into a second combustion chamber by said operation of injecting a remaining portion of the second propellant component into said second combustion chamber through at least one third rotary orifice within said second combustion chamber, wherein said at least one characteristic is selected from the group consisting of a flow pattern and a mixture pattern.
59. The method of operating a rocket engine as recited in claim **57**, further comprising isolating a pressure of said remaining portion of said second propellant component from a pressure of said second combustion chamber.
60. The method of operating a rocket engine as recited in claim **54**, further comprising discharging a remaining portion of said effluent from said first combustion chamber into a second combustion chamber through at least one orifice located in a wall of said second combustion chamber.
61. The method of operating a rocket engine as recited in claim **60**, further comprising modifying at least one characteristic of said at least a portion of said effluent from said first combustion chamber into a second combustion chamber by said operation of discharging a remaining portion of said effluent from said first combustion chamber into a second combustion chamber through at least one orifice located in the wall of said second combustion chamber, wherein said at least one characteristic is selected from the group consisting of a flow pattern and a mixture pattern.
62. The method of operating a rocket engine as recited in claim **57**, further comprising discharging at least a portion of said effluent from said first combustion chamber through a turbine, and rotating said at least one first rotary orifice, said at least one second rotary orifice, and said at least one third rotary orifice with a turbine.
63. A rotor system for a rocket engine, comprising:
   a. a first hollow shaft portion having an axis of rotation, wherein a first end of said first hollow shaft portion is adapted to receive a first fluid propellant component;
   b. at least one first rotary orifice operatively coupled to said first hollow shaft portion, wherein said at least one first rotary orifice is in fluid communication with an interior of said first hollow shaft portion;
   c. an annular duct surrounding at least a portion of said first hollow shaft portion, wherein a first end of said annular duct is adapted to receive a second fluid propellant component; and
   d. at least one second rotary orifice operatively coupled to said first hollow shaft portion, wherein said at least one second rotary orifice is in fluid communication with said annular duct.
64. A rotor system for a rocket engine as recited in claim **63**, further comprising at least one first rotary pressure trap, wherein said at least one first rotary pressure trap comprises a first fluid passage having an inlet and an outlet in fluid communication with one another through said first fluid passage along a length of said first fluid passage, wherein said first fluid passage is adapted for rotation about said axis of rotation, said inlet of said first fluid passage is in fluid communication with said interior of said first hollow shaft portion, said outlet of said first fluid passage is in fluid communication with said at least one said first rotary orifice, and said first fluid passage is adapted so that when said first rotary pressure trap is rotated about said axis of rotation a centrifugal acceleration at any point within said first fluid passage is greater than a centrifugal acceleration at any point at a location selected from the group consisting of said inlet and said outlet.
65. A rotor system for a rocket engine as recited in claim **63**, further comprising at least one second rotary pressure trap, wherein said at least one second rotary pressure trap comprises a second fluid passage having an inlet and an outlet in fluid communication with one another through said second fluid passage along a length of said second fluid passage, wherein said second fluid passage is adapted for rotation about said axis of rotation, said inlet of said second fluid passage is in fluid communication with said annular duct, said outlet of said second fluid passage is in fluid communication with said at least one said second rotary orifice, and said second fluid passage is adapted so that when said second rotary pressure trap is rotated about said axis of rotation a centrifugal acceleration at any point within said second fluid passage is greater than a centrifugal acceleration at any point at a location selected from the group consisting of said inlet and said outlet.
66. A rotor system for a rocket engine as recited in claim **64**, further comprising at least one second rotary pressure trap, wherein said at least one second rotary pressure trap comprises a second fluid passage having an inlet and an outlet in fluid communication with one another through said second fluid passage along a length of said second fluid passage, wherein said second fluid passage is adapted for rotation about said axis of rotation, said inlet of said second fluid passage is in fluid communication with said annular duct, said outlet of said second fluid passage is in fluid communication with said at least one said second rotary orifice, and said second fluid passage is adapted so that when said second rotary pressure trap is rotated about said axis of rotation a centrifugal acceleration at any point within said second fluid passage is greater than a centrifugal acceleration at any point at a location selected from the group consisting of said inlet and said outlet.
67. A rotor system for a rocket engine as recited in claim **63**, further comprising a first inducer in fluid communication with said interior of said first hollow shaft portion, wherein said first inducer is concentric with said axis of rotation.
68. A rotor system for a rocket engine as recited in claim **63**, further comprising a second inducer within at least a portion of said annular duct, wherein said second inducer is concentric with said axis of rotation.
69. A rotor system for a rocket engine as recited in claim **67**, further comprising a second inducer within at least a portion of said annular duct, wherein said second inducer is concentric with said axis of rotation.
70. A rotor system for a rocket engine as recited in claim **63**, further comprising at least one turbine blade operatively coupled to said first hollow shaft portion.
71. A rotor system for a rocket engine, comprising:
   a. a first hollow shaft portion having an axis of rotation, wherein a first end of said first hollow shaft portion is adapted to receive a first fluid propellant component;
   b. at least one first rotary orifice operatively coupled to said first hollow shaft portion, wherein said at least one first rotary orifice is in fluid communication with an interior of said first hollow shaft portion;
   c. a second hollow shaft portion, wherein a first end of said second hollow shaft portion is operatively coupled to a second end of said first hollow shaft portion and an interior of said second hollow shaft portion is in fluid communication with said interior of said first hollow shaft portion; and
   d. at least one third rotary orifice in fluid communication with said interior of said second hollow shaft portion.
72. A rotor system for a rocket engine as recited in claim **71**, wherein said interior of said second hollow shaft portion comprises at least one first groove and said at least one first rotary orifice is in fluid communication with said at least one first groove.
73. A rotor system for a rocket engine as recited in claim **72**, wherein said at least one third rotary orifice is operatively coupled to said at least one first groove proximate to a second end of said second hollow shaft portion.
74. A rotor system for a rocket engine as recited in claim **72,** wherein said interior of said second hollow shaft portion comprises at least one second groove, and said at least one third rotary orifice is in fluid communication with said at least one second groove proximate to a second end of said second hollow shaft portion.
75. A rotor system for a rocket engine as recited in claim **74**, wherein said at least one first groove and said at least one second groove are adapted to proportion a flow of said first propellant component between said at least one first rotary orifice and said at least one third rotary orifice.
76. A rotor system for a rocket engine as recited in claim **71**, further comprising at least one turbine blade, wherein said at least one turbine blade is operatively coupled both to said first hollow shaft portion and to said second hollow shaft portion.
77. A rotor system for a rocket engine as recited in claim **71**, further comprising a first inducer in fluid communication with an interior of said first hollow shaft portion, wherein said first inducer is concentric with said axis of rotation.
78. A rotor system for a rocket engine as recited in claim **71**, further comprising at least one first rotary pressure trap, wherein said at least one first rotary pressure trap comprises a first fluid passage having an inlet and an outlet in fluid communication with one another through said first fluid passage along a length of said first fluid passage, wherein said first fluid passage is adapted for rotation about said axis of rotation, said inlet of said first fluid passage is in fluid communication with said interior of said first hollow shaft portion, said outlet of said first fluid passage is in fluid communication with an element selected from the group consisting of said at least one said first rotary orifice, said interior of said second hollow shaft portion, and said at least one third rotary orifice, and said first fluid passage is adapted so that when said first rotary pressure trap is rotated about said axis of rotation a centrifugal acceleration at any point within said first fluid passage is greater than a centrifugal acceleration at any point at a location selected from the group consisting of said inlet and said outlet.
79. A rotor system for a rocket engine as recited in claim **71**, further comprising a shaft liner within said second hollow shaft portion, wherein said shaft liner has a closed end and a second end, and said second end of said shaft liner is proximate to said second end of said second hollow shaft portion.
80. A rotor system for a rocket engine as recited in claim **78**, further comprising a shaft liner within said second hollow shaft portion, wherein said shaft liner has a closed end and a second end, said second end of said shaft liner is proximate to said second end of said second hollow shaft portion, and said closed end of said shaft liner constitutes a boundary of said at least one first rotary pressure trap.
81. A rotor system for a rocket engine as recited in claim **79**, wherein said interior of said second hollow shaft portion comprises at least one second groove and said at least one third rotary orifice is in fluid communication with said at least one second groove proximate to a second end of said second hollow shaft portion.
82. A rotor system for a rocket engine as recited in claim **79**, wherein said interior of said second hollow shaft portion comprises an annular region outside of said shaft liner.
83. A rotor system for a rocket engine as recited in claim **81**, wherein said interior of said second hollow shaft portion comprises an annular region outside of said shaft liner.
**84.** A rotor system for a rocket engine as recited in claim **63,** further comprising:
   a. a second hollow shaft portion, wherein a first end of said second hollow shaft portion is operatively coupled to a second end of said first hollow shaft portion, and an interior of said second hollow shaft portion is in fluid communication with said interior of said first hollow shaft portion;
   b. at least one third rotary orifice, wherein said at least one third rotary orifice is in fluid communication with said interior of said second hollow shaft portion; and
   c. at least one turbine blade, wherein said at least one turbine blade is operatively coupled both to said first hollow shaft portion and to said second hollow shaft portion.
85. A rotor system for a rocket engine as recited in claim **84**, further comprising:
   a. at least one first rotary pressure trap, wherein said at least one first rotary pressure trap comprises a first fluid passage having an inlet and an outlet in fluid communication with one another through said first fluid passage along a length of said first fluid passage, wherein said first fluid passage is adapted for rotation about said axis of rotation, said inlet of said first fluid passage is in fluid communication with said interior of said first hollow shaft portion, said outlet of said first fluid passage is in fluid communication with an element selected from the group consisting of said at least one said first rotary orifice, said interior of said second hollow shaft portion, and said at least one third rotary orifice, and said first fluid passage is adapted so that when said first rotary pressure trap is rotated about said axis of rotation a centrifugal acceleration at any point within said first fluid passage is greater than a centrifugal acceleration at any point at a location selected from the group consisting of said inlet and said outlet; and
   b. at least one second rotary pressure trap, wherein said at least one second rotary pressure trap comprises a second fluid passage having an inlet and an outlet in fluid communication with one another through said second fluid passage along a length of said second fluid passage, wherein said second fluid passage is adapted for rotation about said axis of rotation, said inlet of said second fluid passage is in fluid communication with said annular duct, said outlet of said second fluid passage is in fluid communication with said at least one said second rotary orifice, and said second fluid passage is adapted so that when said second rotary pressure trap is rotated about said axis of rotation a centrifugal acceleration at any point within said second fluid passage is greater than a centrifugal acceleration at any point at a location selected from the group consisting of said inlet and said outlet.
86. A rotor system for a rocket engine as recited in claim **85**, wherein said interior of said second hollow shaft portion comprises at least one first groove, said interior of said second hollow shaft portion comprises at least one second groove, said at least one first rotary orifice is in fluid communication with said at least one first groove, and said at least one third rotary orifice is in fluid communication with said at least one second groove proximate to a second end of said second hollow shaft portion.
87. A rotor system for a rocket engine as recited in claim **86**, wherein said at least one first groove and said at least one second groove are adapted to proportion a flow of said first propellant component between said at least one first rotary orifice and said at least one third rotary orifice.
88. A rotor system for a rocket engine as recited in claim **87**, further comprising:
   a. a first inducer in fluid communication with an interior of said first hollow shaft portion, wherein said first inducer is concentric with said axis of rotation; and
   b. a second inducer within at least a portion of said annular duct, wherein said second inducer is concentric with said axis of rotation;
89. A rocket engine, comprising:
   a. a first combustion chamber comprising
      i. an outlet; and
      ii. a first combustion chamber liner comprising at least one first orifice; and
   b. a first annular passage at least partially surrounding said first combustion chamber liner;
   c. a second combustion chamber in fluid communication with said outlet of said first combustion chamber, wherein said second combustion chamber comprises a second combustion chamber liner comprising at least one second orifice; and
   d. a second annular passage at least partially surrounding said second combustion chamber liner, wherein said second annular passage is in fluid communication with said first annular passage, whereby when operating, said first combustion chamber generates an effluent, a first portion of said effluent is discharged through said at least one first orifice, through said first and second annular passages, through said at least one second orifice, and into said second combustion chamber so as to provide for effusion cooling of said second combustion chamber liner.
90. A rocket engine as recited in claim **89**, further comprising a flow restriction between said first and second combustion chambers, whereby when operating, a second portion of said effluent from said first combustion chamber flows into said second combustion chamber through said flow restriction so that a pressure in said first combustion chamber at said at least one first orifice is greater than a pressure in said second combustion chamber at said at least one second orifice.
91. A rocket engine as recited in claim **90**, wherein said flow restriction comprises a turbine having an inlet and an outlet, said inlet is in fluid communication with said outlet of said first combustion chamber, and said second combustion chamber is in fluid communication with said outlet of said turbine, whereby said turbine is driven by at least a portion of said second portion of said effluent from said first combustion chamber.
92. A rocket engine as recited in claim **89**, further comprising a source of a first propellant component, wherein said source of said first propellant component is in fluid communication with said first combustion chamber and with said first annular passage, whereby when operating, a portion of said first propellant component flows into said first annular passage, into said second annular passage, through said at least one second orifice, and into said second combustion chamber so as to provide for effusion cooling of said second combustion chamber liner.
93. A rocket engine as recited in claim **90**, further comprising a source of a first propellant component, wherein said source of said first propellant component is in fluid communication with said first combustion chamber and with said first annular passage, whereby when operating, a portion of said first propellant component flows into said first annular passage, into said second annular passage, through said at least one second orifice, and into said second combustion chamber so as to provide for effusion cooling of said second combustion chamber liner.
94. A rocket engine as recited in claim **91**, further comprising a source of a first propellant component, wherein said source of said first propellant component is in fluid communication with said first combustion chamber and with said first annular passage, whereby when operating, a portion of said first propellant component flows into said first annular passage, into said second annular passage, through said at least one second orifice, and into said second combustion chamber so as to provide for effusion cooling of said second combustion chamber liner.
95. A rocket engine as recited in claim **92**, wherein said first propellant component comprises a fuel.
96. A rocket engine as recited in claim **89**, further comprising a source of a second propellant component, wherein said source of said second propellant component is in fluid communication with said first combustion chamber, whereby when operating, a first portion of said second propellant component flows into said first combustion chamber, and a remaining second portion of said second propellant component flows into said second combustion chamber, wherein a temperature of combustion in said first combustion chamber is less than a temperature of combustion in said second combustion chamber.
97. A rocket engine as recited in claim **96**, wherein said first propellant component comprises an oxidizer.
98. A rocket engine as recited in claim **96**, wherein a ratio of said first to said second propellant components in said first combustion chamber is substantially fuel rich compared to a stoichiometric ratio.
99. A rocket engine as recited in claim **96**, wherein said second portion of said second propellant component flows into said second combustion chamber at an intermediate location of said second combustion chamber so that the combustion of a first portion of said second portion of said effluent from said first combustion chamber is isolated from said second combustion chamber liner by an effluent selected from the group consisting of a second portion of said second portion of said effluent from said first combustion chamber, and said first portion of said effluent from said first combustion chamber.
100. A rocket engine as recited in claim **99**, wherein said intermediate location is proximate to a central axis of flow through said second combustion chamber.
101. A rocket engine as recited in claim **92**, further comprising a source of a second propellant component, wherein said source of said second propellant component is in fluid communication with said first combustion chamber, whereby when operating, a first portion of said second propellant component flows into said first combustion chamber, and a remaining second portion of said second propellant component flows into said second combustion chamber, wherein a temperature of combustion in said first combustion chamber is less than a temperature of combustion in said second combustion chamber.
102. A rocket engine as recited in claim **93**, further comprising a source of a second propellant component, wherein said source of said second propellant component is in fluid communication with said first combustion chamber, whereby when operating, a first portion of said second propellant component flows into said first combustion chamber, and a remaining second portion of said second propellant component flows into said second combustion chamber, wherein a temperature of combustion in said first combustion chamber is less than a temperature of combustion in said second combustion chamber.
103. A rocket engine as recited in claim **94**, further comprising a source of a second propellant component, wherein said source of said second propellant component is in fluid communication with said first combustion chamber, whereby when operating, a first portion of said second propellant component flows into said first combustion chamber, and a remaining second portion of said second propellant component flows into said second combustion chamber, wherein a temperature of combustion in said first combustion chamber is less than a temperature of combustion in said second combustion chamber.
104. A rocket engine as recited in claim **101**, wherein said first propellant component comprises a fuel and said second propellant component comprises an oxidizer.
105. A method of cooling a rocket engine, comprising:
   a. generating effluent in a first combustion chamber by partial combustion of a plurality of propellant components, wherein said first combustion chamber has a first combustion chamber liner comprising at least one first orifice, said at least one first orifice is in fluid communication with a first region outside of said first combustion chamber liner;
   b. discharging a first portion of said effluent from said first combustion chamber into a second combustion chamber, wherein said second combustion chamber has a second combustion chamber liner, said first region outside of said first combustion chamber liner is in fluid communication with a second region outside of said second combustion chamber liner, said second combustion chamber liner comprises at least one second orifice between said second region and said second combustion chamber; and
   c. discharging a second portion of said effluent from said first combustion chamber through said at least one first orifice, through said first region and over the outside of at least a portion of said first combustion chamber liner, through said second region and over the outside of at least a portion of said second combustion chamber liner, through said at least one second orifice, and into said second combustion chamber, so as to provide for effusion cooling of said second combustion chamber liner.
106. A method of cooling a rocket engine as recited in claim **105**, wherein said plurality of propellant components are concentrically discharged into said first combustion chamber.
107. A method of cooling a rocket engine as recited in claim **105**, wherein said first portion of said effluent is discharged from said first combustion chamber into said second combustion chamber through a flow restriction, whereby a pressure of said effluent in said first combustion chamber at said at least one first orifice is greater than a pressure in said second combustion chamber at said second orifice.
108. A method of cooling a rocket engine as recited in claim **107**, wherein said flow restriction comprises a turbine.
109. A method of cooling a rocket engine as recited in claim **105**, wherein a temperature of combustion in said first combustion chamber is substantially less than a temperature of combustion in said second combustion chamber.
110. A method of cooling a rocket engine as recited in claim **105**, wherein said plurality of propellant components comprise a fuel and an oxidizer, and a ratio of said fuel and said oxidizer in said first combustion chamber substantially fuel rich compared to a stoichiometric ratio.
111. A method of cooling a rocket engine as recited in claim **110**, wherein a first portion of said fuel is discharged into said first combustion chamber, and a second portion of said fuel is discharged into said first region outside of said first combustion chamber liner.
112. A method of cooling a rocket engine as recited in claim **110**, wherein a first portion of said oxidizer is discharged into said first combustion chamber and a second portion of said oxidizer is discharged into said second combustion chamber.
113. A method of cooling a rocket engine as recited in claim **112**, wherein said second portion of said oxidizer is concentrically discharged into said second combustion chamber.
114. A method of cooling a rocket engine as recited in claim **112**, wherein said second portion of said oxidizer is discharged at an intermediate location in said second combustion chamber.
115. A method of cooling a rocket engine as recited in claim **114**, wherein said intermediate location is proximate to a central axis of flow through said second combustion chamber.
116. A method of cooling a rocket engine as recited in claim **112**, further comprising modifying at least one characteristic of said first portion of said effluent from said first combustion chamber into said second combustion chamber by said operation of discharging said second portion of said oxidizer into said second combustion chamber, wherein said at least one characteristic is selected from the group consisting of a flow pattern and a mixture pattern.
117. A method of cooling a rocket engine as recited in claim **105**, further comprising modifying at least one characteristic of said first portion of said effluent from said first combustion chamber into said second combustion chamber by said operation of discharging said second portion of said effluent through said at least one second orifice into said second combustion chamber, wherein said at least one characteristic is selected from the group consisting of a flow pattern and a mixture pattern.

## Claims

1. A rotor system (30) for a rocket engine (10), comprising:
a. a first hollow shaft portion (46) having an axis of rotation (16), wherein a first end (52) of said first hollow shaft portion (46) is adapted to receive a first fluid propellant component (18, 18');
b. at least one first rotary orifice (78) operatively coupled to said first hollow shaft portion (46), wherein said at least one first rotary orifice (78) is in fluid communication with an interior (82) of said first hollow shaft portion (46);
c. an annular duct (124) surrounding at least a portion of said first hollow shaft portion (46), wherein a first end of said annular duct (124) is adapted to receive a second fluid propellant component (20, 20');
d. at least one second rotary orifice (144) operatively coupled to said first hollow shaft portion (46), wherein said at least one second rotary orifice (144) is in fluid communication with said annular duct (124);
e. a second hollow shaft portion (48), wherein a first end (168) of said second hollow shaft portion (48) is operatively coupled to a second end of said first hollow shaft portion (46), and an interior (62) of said second hollow shaft portion (48) is in fluid communication with said interior (82) of said first hollow shaft portion (46); and
f. at least one third rotary orifice (109), wherein said at least one third rotary orifice (109) is in fluid communication with said interior (62) of said second hollow shaft portion (48).

2. A rotor system (30) for a rocket engine (10) as recited in claim 1, further comprising at least one second rotary pressure trap (146), wherein said at least one second rotary pressure trap (146) comprises a second fluid passage (148) having an inlet (150) and an outlet (152) in fluid communication with one another through said second fluid passage (148) along a length of said second fluid passage (148), wherein said second fluid passage (148) is adapted for rotation about said axis of rotation (16), said inlet (150) of said second fluid passage (148) is in fluid communication with said annular duct (124), said outlet (152) of said second fluid passage (148) is in fluid communication with said at least one said second rotary orifice (144), and said second fluid passage (148) is adapted so that when said second rotary pressure trap (146) is rotated about said axis of rotation (16) a centrifugal acceleration at any point within said second fluid passage (148) is greater than a centrifugal acceleration at any point at a location selected from the group consisting of said inlet (150) and said outlet (152).

3. A rotor system (30) for a rocket engine (10), comprising:
a. a first hollow shaft portion (46) having an axis of rotation (16), wherein a first end (52) of said first hollow shaft portion (46) is adapted to receive a first fluid propellant component (18, 18');
b. at least one first rotary orifice (78) operatively coupled to said first hollow shaft portion (46), wherein said at least one first rotary orifice (78) is in fluid communication with an interior (82) of said first hollow shaft portion (46);
c. a second hollow shaft portion (48), wherein a first end (168) of said second hollow shaft portion (48) is operatively coupled to a second end of said first hollow shaft portion (46) and an interior (62) of said second hollow shaft portion (48) is in fluid communication with said interior (82) of said first hollow shaft portion (46); and
d. at least one third rotary orifice (109) in fluid communication with said interior (62) of said second hollow shaft portion (48).

4. A rotor system (30) for a rocket engine (10) as recited in any of claims 1 through 3, further comprising at least one of at least one first rotary pressure trap (86) and at least one third rotary pressure trap (174), wherein said at least one first rotary pressure trap (86) comprises a first fluid passage (88) having an inlet (90) and an outlet (92) in fluid communication with one another through said first fluid passage (88) along a length of said first fluid passage (88), wherein said first fluid passage (88) is adapted for rotation about said axis of rotation (16), said inlet (90) of said first fluid passage (88) is in fluid communication with said interior (82) of said first hollow shaft portion (46), said outlet (92) of said first fluid passage (88) is in fluid communication with at least one of said at least one said first rotary orifice (78), said interior (62) of said second hollow shaft portion (48), and said at least one third rotary orifice (109), said first fluid passage (88) is adapted so that when said first rotary pressure trap (86) is rotated about said axis of rotation (16) a centrifugal acceleration at any point within said first fluid passage (88) is greater than a centrifugal acceleration at any point at a location selected from the group consisting of said inlet (90) and said outlet (92), said at least one third rotary pressure trap (174) comprises a third fluid passage (176) having an inlet (178) and an outlet (180) in fluid communication with one another through said third fluid passage (176) along a length of said third fluid passage (176), wherein said third fluid passage (176) is adapted for rotation about said axis of rotation (16), said inlet (178) of said third fluid passage (176) is in fluid communication with said interior (82) of said first hollow shaft portion (46), said outlet (18)) of said third fluid passage (176) is in fluid communication with said at least one said third rotary orifice (109), and said third fluid passage (176) is adapted so that when said third rotary pressure trap (174) is rotated about said axis of rotation (16) a centrifugal acceleration at any point within said third fluid passage (176) is greater than a centrifugal acceleration at any point at a location selected from the group consisting of said inlet (178) and said outlet (180).

5. A rotor system (30) for a rocket engine (10) as recited in any of claims 1 through 4, further comprising at least one of a first inducer (64) in fluid communication with said interior (82) of said first hollow shaft portion (46) and a second inducer (126) within at least a portion of said annular duct (124), wherein said first inducer first inducer and said second inducer (126) are concentric with said axis of rotation (16).

6. A rotor system (30) for a rocket engine (10) as recited in any of claims 1 through 5, wherein said interior (62) of said second hollow shaft portion (48) comprises at least one first groove (98, 102), and at least one of said at least one first rotary orifice (78) and said at least one third rotary orifice (109) is in fluid communication with said at least one first groove (98, 102).

7. A rotor system (30) for a rocket engine (10) as recited in any of claims 1 through 6, wherein said interior (62) of said second hollow shaft portion (48) comprises at least one second groove (98, 106), and said at least one third rotary orifice (109) is in fluid communication with said at least one second groove (98, 106) proximate to a second end (170) of said second hollow shaft portion (48).

8. A rotor system (30) for a rocket engine (10) as recited in claim 7, wherein said at least one first groove (98, 102) and said at least one second groove (98, 106) are adapted to proportion a flow of said first propellant component between said at least one first rotary orifice (78) and said at least one third rotary orifice (109).

9. A rotor system (30) for a rocket engine (10) as recited in any of claims 1 through 8, further comprising at least one turbine (40), wherein said at least one turbine (40) is operatively coupled to at least one of said first hollow shaft portion (46) and said second hollow shaft portion (48).

10. A rotor system (30) for a rocket engine (10) as recited in any of claims 1 through 9, further comprising a shaft liner (162) within said second hollow shaft portion (48), wherein said shaft liner (162) has a closed end (164) and a second end (166), and said second end (166) of said shaft liner (162) is proximate to said second end (170) of said second hollow shaft portion (48).
